(19) Europäisches Patentamt
European Patent Office
Office européen des brevets

(11) EP 2 790 925 B1

(12) **FASCICULE DE BREVET EUROPEEN**

(45) Date de publication et mention de la délivrance du brevet:
**05.04.2017 Bulletin 2017/14**

(21) Numéro de dépôt: **12809731.8**

(22) Date de dépôt: **14.12.2012**

(51) Int Cl.:
***B60C 1/00*** *(2006.01)* ***B60C 11/14*** *(2006.01)*

(86) Numéro de dépôt international:
**PCT/EP2012/075627**

(87) Numéro de publication internationale:
**WO 2013/087878 (20.06.2013 Gazette 2013/25)**

(54) **BANDE DE ROULEMENT AYANT DES ÉLÉMENTS DE SCULPTURE RECOUVERTS D'UN ASSEMBLAGE DE FIBRES IMPRÉGNÉES**

LAUFFLÄCHE MIT LAUFFLÄCHENPROFILELEMENTEN MIT EINER ABDECKUNG AUS IMPRÄGNIERTEM FASERAGGREGAT

TREAD COMPRISING TREAD PATTERN ELEMENTS COVERED WITH AN IMPREGNATED FIBRE ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1161811**

(43) Date de publication de la demande:
**22.10.2014 Bulletin 2014/43**

(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeurs:
- **ABAD, Vincent**
  **F-63040 Clermont-Ferrand Cedex 9 (FR)**
- **EL-HARAK, Abdeslam**
  **F-63040 Clermont-Ferrand Cedex 9 (FR)**
- **PERRIN, Frédéric**
  **F-63040 Clermont-Ferrand Cedex 9 (FR)**
- **MAESAKA, Masayuki**
  **F-63040 Clermont-Ferrand Cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A1- 1 982 848**
**EP-A1- 2 042 346**
**EP-A2- 0 320 215**
**JP-A- 61 119 409**
**JP-A- 2004 314 783**
**US-A- 2 710 042**
**US-A1- 2010 154 948**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 790 925 B1

## Description

### Domaine de l'invention

L'invention concerne des pneumatiques et plus particulièrement la bande de roulement de tels pneumatiques.

### État de la technique

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2 mm et/ou incisions de largeur moyenne inférieure à 2 mm), ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2 mm.

Pour améliorer l'adhérence du pneumatique sur une chaussée humide, il est connu que la nature même du mélange caoutchouteux (ou encore appelé : composition de caoutchouc) composant la bande de roulement a une incidence notable. Ainsi, une bande de roulement d'un pneumatique en mélange caoutchouteux ayant une meilleure adhérence sur sol mouillé permet d'obtenir des performances améliorées en roulage dans des conditions de sol mouillé. Toutefois, en parallèle à cette amélioration de performance en adhérence sur sol mouillé, il se produit en règle générale une perte de performance en usure sur route sèche, ce qui se traduit par une durée de vie sur usure réduite et nécessite un changement plus fréquent des pneumatiques sur un véhicule.

Le document WO 03/089257 des demanderesses divulgue une bande de roulement pour bandage pneumatique comprenant :

- une pluralité d'éléments de sculpture comprenant une face de contact destinée à venir en contact avec la chaussée pendant le roulage d'un pneumatique pourvu de ladite bande et des faces latérales, la limite du contact de la face de contact avec le sol formant au moins une arête ;
- une pluralité de découpures sous la forme de rainure et/ou d'incision, lesdites découpures étant délimitées par des faces latérales en vis-à-vis ;
- chaque élément de sculpture étant formé avec au moins un premier mélange caoutchouteux dit mélange de base ;

ladite bande de roulement ayant, vue en coupe dans un plan contenant l'épaisseur de ladite bande, au moins une face délimitant au moins une découpure recouverte au moins en partie avec une couche de recouvrement. Cette bande de roulement est telle que le mélange de base a une adhérence sur sol mouillé inférieure à l'adhérence du matériau de la couche de recouvrement sur le même sol.

Cette bande de roulement permet d'améliorer sensiblement les performances sur sol mouillé des bandages pneumatiques qui en sont équipés.

Un mode de fabrication de cette bande de roulement est notamment divulgué dans le document WO 2006/069912. Selon ce mode de fabrication, dans une première étape, il est prévu d'injecter sous forme d'un ou plusieurs inserts le matériau de recouvrement dans l'ébauche crue à l'aide d'une buse d'injection. Le ou les inserts sont ensuite mis en forme, dans une seconde étape, par des cordons d'un moule de vulcanisation pour recouvrir tout ou partie des parois des rainures moulées par ces cordons.

Ce mode de fabrication connaît quelques limites, en particulier pour obtenir des moulages de précision. En effet au cours de sa mise en forme, l'insert subi un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de matériau de recouvrement ainsi formée peuvent alors être aléatoires. Les avantages apportés par la couche supplémentaire sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

Le document EP 1982848 - A décrit un pneumatique ayant des rainures et des blocs. La couche d'élastomère des rainures est renforcée par des fibres ou des filaments. Le module d'élasticité de la couche élastomère dans la direction circonférentielle est supérieur au module dans la direction transversale, avec un rapport entre les deux modules compris entre 2 et 20. Toutefois, ce document ne donne aucune information précision sur la longueur des fibres dans le matériau de recouvrement. Le document US 2710042 - A décrit un pneumatique dont la bande de roulement comprend un matériau renforcé par des fibres. Ce document ne décrit pas de longueur particulière des fibres.
Il existe donc un besoin pour améliorer la mise en place d'une couche d'un matériau de recouvrement sur des parois de découpures d'une bande de roulement d'un pneumatique.

## Définitions

Par « pneumatique » ou « bandage pneumatique », on entend tous les types de bandages élastiques soumis à une pression interne ou non.
Par « ébauche crue » d'un pneumatique, on entend une superposition d'une pluralité de produits semi-finis caoutchouteux présents sous forme de bandelettes ou de feuilles, renforcées ou non. L'ébauche crue est destinée à être vulcanisée dans un moule pour obtenir le pneumatique.
Par « bande de roulement » d'un pneumatique, on entend une quantité de matériau caoutchouteux délimitée par des surfaces latérales et par deux surfaces principales dont l'une est destinée à entrer en contact avec une chaussée lorsque le pneumatique roule.
Par « surface de roulement », on entend la surface formée par les points de la bande de roulement du pneumatique qui entrent en contact avec la chaussée lorsque le pneumatique roule.
Par « élément de sculpture », on entend des éléments de la bande de roulement délimités par des découpures, c'est-à-dire des rainures et/ou des incisions. Parmi les éléments de sculpture, on distingue des nervures, faisant le tour complet du pneumatique, et des blocs ne faisant par le tour complet du pneumatique.
Par « moule », on entend un ensemble d'éléments moulants séparés qui, par rapprochement relatif, permettent de délimiter un espace de moulage toroïdal.
Par « surface de moulage » d'un moule, on entend la surface du moule destinée à mouler la surface de la bande de roulement du pneumatique.
Par « lame » d'un élément moulant, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment dans l'aire de contact du pneumatique avec le sol. Les cordons sont destinés à mouler des rainures dans la bande de roulement, c'est-à-dire des découpures qui ne ferment pas dans l'aire de contact du pneumatique avec le sol.
Par « étape de moulage », on entend une opération qui débute au moment où la lame vient en contact avec le matériau recouvrant l'ébauche crue. Cette opération se termine au moment où cette lame quitte la découpure qu'elle a moulée.

## Description brève de l'invention

L'invention se réfère à une bande de roulement pour bandage pneumatique comme définie dans la revendication 1.
Des formes préférentielles de l'invention sont définies dans les revendications 2 à 32.
L'invention a pour objet une bande de roulement similaire à celle du document WO 03/089257 dans laquelle, vue en coupe dans un plan normal à l'axe de rotation du bandage pneumatique et traversant au moins une face de contact d'un élément de sculpture, au moins une des découpures adjacentes à la face de contact est recouverte au moins en partie avec une couche de recouvrement et dans laquelle la couche de recouvrement comporte un assemblage de fibres, tissé ou intissé.
La présence de cet assemblage de fibres, tissé ou intissé, permet, en raison de sa rigidité intrinsèque, de mettre en place aisément et avec une grande précision dans les découpures de la sculpture de la bande de roulement la couche de matériau de recouvrement.
Ces découpures ainsi recouvertes sont préférentiellement normales à la direction circonférentielle du bandage pneumatique ou ont une orientation comportant une composante normale à la direction circonférentielle du bandage pneumatique.
La présence de la couche de recouvrement avec une telle orientation de la découpure permet d'améliorer l'adhérence du bandage pneumatique, notamment sur route enneigée.
De préférence, la couche de recouvrement comportant un matériau élastomère, l'assemblage de fibres est imprégné par le matériau élastomère de la couche de recouvrement.

Par « assemblage de fibres, tissé ou intissé, imprégné par un matériau élastomère, on entend tout assemblage bi dimensionnel ou tri dimensionnel de fibres imprégné après sa réalisation par un matériau élastomère. En particulier, une composition caoutchouteuse comportant des fibres réalisée par malaxage puis mise en forme de l'ensemble des constituants de la composition est exclue de cette définition.

Selon l'invention, les assemblages de fibres utilisent des fibres longues assemblées par tissage ou non tissées. Par fibres longues, on entend des fibres dont la plus grande dimension est supérieure à 50 mm.

La présence d'un tel assemblage de fibres imprégné par le matériau élastomère de la couche de recouvrement permet d'obtenir une excellente cohésion de la couche de recouvrement avant la vulcanisation de l'ébauche du bandage pneumatique et facilite ainsi la mise en place lors du moulage du bandage pneumatique de cette couche de recouvrement.

Selon un premier mode de réalisation, l'assemblage de fibres est un assemblage bidimensionnel de fibres, tel un tissu ou un intissé.

Selon un autre mode de réalisation, l'assemblage de fibres est un assemblage tridimensionnel de fibres, tel un feutre.

Les fibres de l'assemblage de fibres peuvent être choisies dans le groupe des fibres textiles, des fibres minérales et de leurs mélanges.

De très nombreux types de fibres peuvent être utilisées pour donner à l'assemblage de fibres et donc à la couche de recouvrement une rigidité d'extension suffisante pour faciliter la mise en place de cette couche de recouvrement lors du moulage de l'ébauche du bandage pneumatique.

De préférence, la densité apparente de l'assemblage de fibres avant imprégnation d'un matériau élastomère est inférieure à 0,4 et de préférence inférieure à 0,25.

Cette faible densité initiale de l'assemblage de fibres permet d'obtenir une excellente imprégnation par le matériau élastomère, imprégnation réalisée par exemple à chaud et sous pression, par calandrage ou moulage dans une presse par exemple.

Selon un mode de réalisation avantageux, le matériau élastomère de la couche de recouvrement est une composition à base d'au moins un élastomère diénique.

Selon un mode de réalisation particulier, la composition à base d'un élastomère diénique est fortement chargée en soufre. Préférentiellement, le taux de soufre est supérieur à 20 parties pour cent parties d'élastomère.

Un tel matériau de la couche de recouvrement permet d'obtenir une couche de recouvrement de très forte rigidité, ce qui est très favorable à l'adhérence sur sol enneigé.

Selon un autre mode de réalisation, le matériau élastomère de la couche de recouvrement est à base d'au moins un élastomère thermoplastique, ledit élastomère thermoplastique étant un copolymère bloc comprenant au moins un bloc élastomère et au moins un bloc thermoplastique.

L'utilisation d'un élastomère thermoplastique permet de réaliser l'imprégnation de l'assemblage de fibres dans d'excellentes conditions par moulage dans une presse du matériau élastomère sur l'assemblage de fibres ou par moulage par injection toujours à chaud, au-delà de la température de fusion ou de ramollissement des élastomères thermoplastiques.

Selon un mode de réalisation préférentiel, le module dynamique de cisaillement G* du matériau élastomère de la couche de recouvrement, soumis à une contrainte maximale alternée de 0,7 MPa, à une fréquence de 10 Hz et à une température de -10°C est supérieur à 100 MPa et de préférence supérieur à 200 MPa.

Ce matériau de très haut module à basse température permet de réaliser une couche de recouvrement de haute rigidité qui est très favorable à l'adhérence sur neige.

De préférence, l'épaisseur de la couche de recouvrement est comprise entre 0,1 et 3,5 mm.

Selon un mode de réalisation particulier, cette épaisseur est comprise entre 0,4 et 1,0 mm, cela permet de garder un excellent comportement sur sol enneigé en limitant la pénalisation de l'adhérence sur un sol de glace.

Selon un autre mode de réalisation particulier, cette épaisseur est comprise entre 2,0 et 3,0 mm. Cette épaisseur est très favorable pour améliorer le compromis d'adhérence sur sols mouillé et enneigé.

De préférence, la couche de recouvrement s'étend, à partir du fond de la découpure, sur une hauteur Hr au moins égale à 4 mm.

Cela permet, lorsque la hauteur Hr est proche de 4 mm d'améliorer le comportement sur sol enneigé par la mise en action de la couche de recouvrement très rigide. On sait en effet que les pneumatiques spécialisés pour l'adhérence sur sol enneigé voient leurs propriétés diminuer lorsque l'épaisseur résiduelle des éléments de sculptures devient proche de 4 mm et en-dessous. Pour de tels pneumatiques, ce mode de réalisation assure le prolongement de leurs qualités intrinsèques même avec une faible hauteur d'éléments de sculpture.

Selon un autre mode de réalisation avantageux, le matériau de recouvrement s'étend, à l'état neuf, jusqu'à l'arête formée par la limite entre la face de contact et la face latérale de l'élément de sculpture.

Dans ce mode de réalisation, les propriétés de la couche de recouvrement sont utilisées dès les premiers kilomètres de roulage.

L'ensemble des bandes de roulement pour bandages pneumatiques précédemment décrits peut être réalisé

notamment avec le procédé présenté dans le document EP 0510550.

Cet ensemble est cependant particulièrement adapté pour être réalisé avec le procédé qui est maintenant décrit.

Cette méthode de fabrication comporte une étape de préparation d'une ébauche crue du pneumatique, une étape de mise en place d'une couche de recouvrement comportant un assemblage de fibres, tissé ou intissé, sur tout ou partie d'une surface externe de l'ébauche crue, une étape de mise en place de l'ébauche crue dans un moule, ce moule comportant une lame, une étape de moulage d'une face latérale d'un élément de sculpture par cette lame et une étape de vulcanisation de l'ébauche crue pour l'obtention du pneumatique. La méthode de fabrication comporte également une étape de découpe de la couche de recouvrement en une pluralité de parties de même épaisseur et au cours du moulage de la face latérale de l'élément de sculpture par la lame, une étape d'entraînement par cette lame d'une ou plusieurs des parties de la couche de recouvrement dans l'ébauche crue. De préférence, l'étape de découpe de la couche de recouvrement est réalisée au cours du moulage de la face latérale de l'élément de sculpture.

Par la méthode de fabrication de l'invention, la couche de recouvrement se trouve positionnée sous la lame et la zone de contact de la lame avec cette couche au moment du moulage est importante. Ainsi lors de ce moulage, la couche de recouvrement est entraînée par la lame dans la profondeur de l'ébauche crue et n'est pas déformée par un angle vif du moule comme dans l'art antérieur. En raison de la rigidité intrinsèque en extension de l'assemblage de fibres, la couche de recouvrement n'est que très faiblement déformée pendant cette étape d'entraînement lors du moulage de l'ébauche de pneumatique.

L'invention concerne particulièrement les bandages pneumatiques destinés à équiper des véhicules à moteur de type tourisme, SUV ("*Sport Utility Vehicles*"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

## Brève description des dessins

D'autres caractéristiques et avantages de l'invention ressortiront de la description suivante, donnée à titre d'exemple, sans caractère limitatif, en regard des dessins annexés sur lesquels :

- la figure 1 représente une vue partielle en plan d'une sculpture à blocs d'une bande de roulement ;
- la figure 2 montre les blocs de la figure 1 en coupe transversale selon la ligne de coupe II-II ;
- la figure 3 présente en vue de dessus une éprouvette de test de frottement neige ;
- la figure 4 présente en vue de côté l'éprouvette de la figure 3 ;
- la figure 5 représente schématiquement un élément moulant conforme à un procédé de moulage d'une bande de roulement de l'invention ;
- la figure 6a illustre une première étape de moulage par l'élément moulant de la figure 5, dans laquelle des moyens de découpe sont en contact au niveau de leur extrémité avec la couche de recouvrement recouvrant l'ébauche crue de la bande de roulement ;
- la figure 6b illustre une seconde étape de moulage dans laquelle la lame est en contact avec la couche de recouvrement recouvrant l'ébauche crue ;
- la figure 6c illustre une troisième étape de moulage dans laquelle les moyens de découpe et la lame sont entièrement positionnés dans l'ébauche crue ; et
- la figure 6d représente schématiquement une partie de la bande de roulement selon l'invention à la fin des étapes de moulage des figures 6a-6c.

## Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par

l'expression « de a à b » signifie le domaine de valeurs allant de a jusqu'à b (c'est-à-dire incluant les bornes strictes a et b).

## I. Tests

### A. Coefficient de frottement mesuré sur éprouvettes

Les tests de frottement ont été conduits avec un tribomètre linéaire selon la méthode décrite dans l'article intitulé « Investigation of rubber friction on snow for tyres » écrit par Sam Ella, Pierre-Yves Formagne, Vasileios Koutsos et Jane R. Blackford (38th LEEDS-Lyon Symposium on tribology, Lyon, 6 - 9 Septembre 2011).

Les paramètres du test sont la vitesse égale à 0.5 $ms^{-1}$ et la charge de 0.82 kN. La vitesse stabilisée est atteinte avec une accélération de $5ms^{-2}$.

L'éprouvette 30 utilisée est présentée aux figures 3 (vue de dessus) et 4 (vue de côté) annexées. Cette éprouvette est constituée de quatre blocs 31 de mélange caoutchouteux moulés sur un support caoutchouteux 34 parallélépipédique (de longueur L=60 mm, de largeur 1=56 mm et d'épaisseur 2 mm).

Les blocs de largeur $L_1$ égale à 25 mm et de longueur $L_2$ égale à 27 mm, sont séparés par une rainure longitudinale 3 et une rainure transversale 4, toutes deux de l'ordre de 6 mm de large. Chaque bloc 31 comporte quatre incisions 33 d'orientation axiale Y débouchantes de part et d'autre du bloc de 0,6 mm d'épaisseur chacune qui séparent le bloc 31 en cinq parties égales 32. La hauteur des blocs est de 9 mm. Le déplacement de l'éprouvette est effectué dans la direction longitudinale X, normale à l'orientation axiale Y des incisions.

Les tests ont été réalisés sur une piste de longueur 110 mm, recouverte d'une neige artificielle compacte, à une température de -10°C.

La charge et la force tangentielle sont enregistrées durant le déplacement horizontal du tronçon de bande de roulement. On calcule alors le coefficient de frottement qui est obtenu en divisant la valeur moyenne de la force tangentielle par la charge appliquée sur les 30 premiers millimètres du déplacement.

### B. Mesures mécaniques dynamiques

Dans le présent document, les termes « module élastique G' » et « module visqueux G" » désignent des propriétés dynamiques bien connues de la personne du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm (elle a donc une section circulaire de 78.5 $mm^2$), l'épaisseur « L » de chacune des portions de composition caoutchouteuse est de 2 mm, ce qui donne un ration « d/L » de 5 (contrairement à la norme ISO 2856, mentionnée dans la norme ASTM, paragraphe X2.4, qui préconise une valeur d/L de 2).

On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre.

Une accommodation de l'éprouvette est réalisée préalablement à la mesure. L'éprouvette est alors sollicitée en cisaillement sinusoïdal à 10Hz, à 100% de déformation crête-crête, à température ambiante.

La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise la l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C).

Le « module complexe » G* se définit comme la valeur absolue de la somme complexe des modules élastique G' et visqueux G" :

$$G^* = \sqrt{(G'^2 + G''^2}$$

## II. Couche de recouvrement

### A. Assemblage de fibres

Un élément essentiel de l'ensemble des couches de recouvrement selon un aspect de l'invention est de comporter un assemblage de fibres, tissé ou intissé.

On entend par assemblage de fibres, tissé ou intissé, tout produit manufacturé constitué d'un voile, d'une nappe ou d'un matelas de fibres, qu'elles soient réparties directionnellement ou par hasard, et dont les fibres sont enchevêtrées ou entremêlées bidimensionnellement ou tridimensionnellement pour les intissé ou tissées pour les tissés.

La présence de cet assemblage de fibres, tissé ou intissé permet, en raison de sa rigidité intrinsèque, de mettre en place aisément et avec une grande précision dans les découpures de la sculpture de la bande de roulement la couche de matériau de recouvrement.

Selon un premier mode de réalisation, l'assemblage de fibres est un assemblage bidimensionnel de fibres, tel un tissu ou un intissé.

Selon un autre mode de réalisation, l'assemblage de fibres est un assemblage tridimensionnel de fibres, tel un feutre.

Les fibres de l'assemblage de fibres peuvent être choisies dans le groupe des fibres textiles, des fibres minérales et de leurs mélanges.

De très nombreux types de fibres peuvent être utilisées pour donner à l'assemblage de fibres et donc à la couche de recouvrement une rigidité d'extension suffisante pour faciliter la mise en place de cette couche de recouvrement lors du moulage de l'ébauche du bandage pneumatique.

Les modes de fabrication de tels assemblages de fibres, tissés ou intissés sont bien connus, notamment par aiguilletage ou foulage pour les assemblages tridimensionnels tels les feutres.

Les fibres du feutre peuvent être choisies parmi des fibres textiles d'origine naturelle, par exemple, dans le groupe des fibres de soie, de coton, de bambou, de cellulose, de laine et de leurs mélanges.

Des exemples de feutres de laine sont les feutres « PLB » et « MLB » de la société Laoureux. Ces feutres sont commercialisés avec une densité apparente variable entre 0,20 et 0,44.

Les fibres du feutre peuvent aussi être choisies dans le groupe des fibres textiles synthétiques, par exemple de polyester, de polyamide, de carbone, d'aramide, de polyéthylène, de polypropylène, de polyacrylonitrile, de polyimide, de polysulfones, de polyéther sulfones, de polyuréthannes, d'alcool polyvinylique et leurs mélanges.

Les fibres de polyester du feutre peuvent avantageusement être choisies dans le groupe des fibres de polyéthylène téréphtalate (PET - Dacron Invista inc.), de polybutylène téréphtalate (PBT), de polyéthylène naphtalate (PEN) et de leurs mélanges.

A titre d'exemple de feutres constitués de fibres aramides, on peut citer les feutres réalisés avec des fibres de Nomex® (fibres méta-aramide : poly(m-phénylèneisophtalamide), de sigle MPD-I) de la société Du Pont de Nemours.

Les fibres du feutre peuvent encore être choisies dans le groupe des fibres minérales, par exemple des fibres de verre et de basalte.

Les feutres peuvent être indifféremment composés de plusieurs types de fibres d'un même groupe ou de groupes différents tels que précédemment décrits.

De préférence, la densité apparente de l'assemblage de fibres avant imprégnation d'un matériau élastomère est inférieure à 0,4 et de préférence inférieure à 0,30.

Cette faible densité apparente a pour but d'obtenir une excellente imprégnation de l'assemblage de fibres par le matériau élastomère de la couche de recouvrement.

## B. <u>Matériau élastomère de la couche de recouvrement</u>

### 1. <u>Mélange diénique</u>

Selon une caractéristique essentielle de l'invention, les assemblages de fibres utilisés dans la couche de recouvrement d'une face latérale d'un élément de sculpture de la bande de roulement sont imprégnés d'un matériau élastomère.

Par « assemblage de fibres, tissé ou intissé, imprégné par un matériau élastomère », on entend tout assemblage bi dimensionnel ou tri dimensionnel de fibres imprégné après sa réalisation par un matériau élastomère. En particulier, une composition caoutchouteuse comportant des fibres réalisée par malaxage puis mise en forme de l'ensemble des constituants de la composition est exclue de cette définition.

La présence d'un tel assemblage de fibres imprégné par le matériau élastomère de la couche de recouvrement permet d'obtenir une excellente cohésion de la couche de recouvrement lors de sa fabrication et facilite ainsi la mise en place lors du moulage du bandage pneumatique de cette couche de recouvrement.

Selon un premier mode de réalisation, les assemblages de fibres utilisés sont imprégnés d'un matériau élastomère à base d'un élastomère diénique.

a) **Élastomère diénique**

Par élastomère ou caoutchouc « diénique », doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

L'élastomère diénique du matériau élastomère est choisi préférentiellement dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, le matériau élastomère comprend un coupage d'un (un ou plusieurs) élastomère diénique dit « à haute Tg » présentant une Tg comprise entre - 70°C et 0°C et d'un (un ou plusieurs) élastomère diénique dit « à basse Tg » comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition du matériau élastomère comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition du matériau

élastomère comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions formulées selon l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

**(1) Charge nanométrique ou renforçante**

On peut utiliser tout type de charge renforçante connue pour ses capacités à renforcer une composition de caoutchouc utilisable pour la fabrication de bandes de roulement de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites « HDS »), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, pour le matériau élastomère, le taux de charge renforçante totale (noir de carbone et/ou charge inorganique renforçante telle que silice) est supérieur à 30 pce et préférentiellement compris entre 40 et 100 pce ; cela permet d'assurer au matériau élastomère une bonne résistance à la fissuration tout en conservant une faible hystérésis.

De manière préférentielle, la taille moyenne (en masse) des nanoparticules est comprise entre 20 et 200 nm, plus préférentiellement entre 20 et 150 nm.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits

« symétriques » répondant à la formule générale (I) suivante:

(I) $Z - A - S_x - A - Z$,

dans laquelle :

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après :

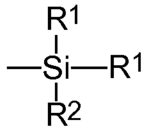 ; 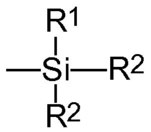 ; 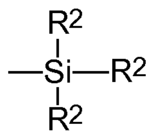 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de matériau élastomère selon un objet de l'invention, la teneur en agent de couplage est préférentiellement comprise entre 3 et 12 pce, plus préférentiellement entre 4 et 9 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

**(2) <u>Additifs divers</u>**

La composition du matériau élastomère peut comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La formulation du matériau élastomère peut également contenir, en complément, des agents de couplage, des activateurs de couplage, des agents de recouvrement des charges inorganiques ou plus généralement des agents d'aide à la mise en oeuvre susceptibles de manière connue, grâce à une amélioration de la dispersion de la charge

dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Le matériau élastomère peut également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global d'un tel agent plastifiant préférentiel est de préférence compris entre 10 et 100 pce, plus préférentiellement compris entre 20 et 80 pce, notamment dans un domaine de 10 à 50 pce.

Parmi les résines plastifiantes hydrocarbonées ci-dessus (on rappelle que l'appellation « résine » est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme par exemple des huiles MES ou TDAE.

**(3) Ébonite**

Selon un mode de réalisation particulier du matériau élastomère de la couche de recouvrement, on utilise une composition à base d'au moins un élastomère diénique et très fortement chargé en soufre.

A titre préférentiel, la composition comporte plus de 20 parties pour cent parties d'élastomère de soufre.

Une couche de recouvrement avec un tel matériau élastomère peut avantageusement comporter un assemblage de fibres bidimensionnel tel un tissu ou un intissé de très faible densité apparente avant imprégnation.

Une telle couche de recouvrement après vulcanisation de l'ébauche du pneumatique a l'avantage d'avoir une très forte rigidité très favorable pour le comportement des pneumatiques sur sol enneigé lorsque l'orientation de la découpure qui comporte la couche de recouvrement a une orientation avec une composante normale à la direction circonférentielle du bandage pneumatique.

**(4) Préparation**

La composition de matériau élastomère à base de caoutchouc diénique est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

L'assemblage de fibres est ensuite imprégné par cette composition comme précédemment indiqué par calandrage à chaud, moulage sous presse ou injection sous pression.

**2. Élastomère thermoplastique**

Selon un second mode de réalisation du matériau élastomère de la couche de recouvrement, la composition de ce matériau élastomère est à base d'au moins un élastomère thermoplastique, l'élastomère thermoplastique étant un copolymère bloc comprenant au moins un bloc élastomère et au moins un bloc thermoplastique.

**a) Élastomère thermoplastique (TPE)**

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre d'un aspect de l'invention est un copolymère à blocs dont la nature chimique des blocs thermoplastiques et des blocs élastomères peut varier.

**(1) Structure du TPE**

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués,

la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour couche de recouvrement.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$l. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la couche de recouvrement lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse étant relative à la partie élastomère du TPE, et la température la plus haute étant relative à la partie thermoplastique du TPE. Ainsi, les blocs souples des TPE se définissent par une Tg inférieure à la température ambiante (25°C), tandis que les blocs rigides ont une Tg supérieure.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Également, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

(2) Nature des blocs élastomères

Les blocs élastomères du TPE pour les besoins de l'invention, peuvent être tous les élastomères connus de l'homme de l'art. Ils possèdent de préférence une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en $C_4$ - $C_{14}$ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en $C_4$ - $C_{14}$ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en couche de recouvrement d'une face latérale d'un élément de sculpture de bande de roulement de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

**(3) Nature des blocs thermoplastiques**

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverse nature, notamment, ils peuvent constituer les blocs suivants ou leurs mélanges :

- les polyoléfines (polyéthylène, polypropylène)
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :

- l'acénaphthylène : l'homme de l'art pourra par exemple se référer à l'article de Z. Fodor et J.P. Kennedy, Polymer

Bulletin 1992 29(6) 697-705 ;

- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la couche de recouvrement peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en couche de recouvrement.

Le bloc thermoplastique peut également être constitué de plusieurs blocs thermoplastiques tels que définis ci-dessus.

**(4) Exemples de TPE**

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la composition du matériau élastomère de la couche de recouvrement selon un aspect de l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous le dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

(5) <u>Quantité de TPE</u>

Si d'éventuels autres élastomères (non thermoplastiques) sont utilisés dans la composition thermoplastique élastomère, le ou les élastomères TPE constituent la fraction majoritaire en poids. Ainsi, la quantité d'élastomère TPE est comprise dans un domaine qui varie de 65 à 100 pce, préférentiellement de 70 à 100 pce. Il est bien entendu que la somme des quantités des élastomères TPE et diéniques est toujours 100 pce.

Le ou les élastomères TPE sont préférentiellement le ou les seuls élastomères de la couche de recouvrement.

(6) <u>Autres éléments de la composition</u>

La composition du matériau élastomère peut aussi comporter des charges ou des additifs divers tels que déjà décrits.

(7) <u>Préparation</u>

Les élastomères TPE peuvent être mis en oeuvre de façon classique pour des TPE, par extrusion ou moulage, par exemple à partir d'une matière première disponible sous la forme de billes ou de granulés.

Le matériau élastomère à base d'un élastomère thermoplastique selon l'invention est préparé de façon classique, par exemple, par incorporation des différents composants dans une extrudeuse bi-vis, de façon à réaliser la fusion de la matrice et une incorporation de tous les ingrédients, puis utilisation d'une filière permettant de réaliser le profilé. L'imprégnation de l'assemblage de fibres par le matériau élastomère s'effectue ensuite comme précédemment indiqué par calandrage à chaud ou injection sous pression.

Si le bloc élastomère du TPE est un bloc élastomère saturé, il pourra être nécessaire d'inclure entre la couche de recouvrement et la paroi adjacente de l'élément de sculpture de la bande de roulement un film ou couche ou couche d'adhésion qui contiendra un TPE à bloc élastomère insaturé pour favoriser l'adhésion entre ladite couche de recouvrement et la couche adjacente de la bande de roulement au sein du pneumatique fini.

III. <u>Bande de roulement avec couche de recouvrement</u>

Sur la figure 1, on distingue des faces de contact 2 de blocs 1 de forme rectangulaire d'une sculpture de bande de roulement selon l'invention, lesdits blocs 1 étant délimités par des rainures d'orientation longitudinale 4 et transversale ou axiale 3. Chacun de ces blocs 1 comporte quatre faces latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau ou de neige). Chaque bloc 1 est de forme rectangulaire de largeur L1 et de longueur L2 (la direction de la largeur L1 des blocs étant dans le cas décrit confondue avec la direction longitudinale de la bande de roulement ou encore la direction circonférentielle sur le pneumatique pourvu de la bande de roulement).

Les quatre faces latérales 13, 14, 15, 16 sont recouvertes en totalité avec une épaisseur E1 (visible sur la figure 2) sensiblement constante (sur toute la hauteur Hr de recouvrement, dans le cas présent égale à la profondeur H des rainures) d'une couche de recouvrement MR différent d'une composition de caoutchouc MB (dite composition de base dans ce qui suit).

Sur la coupe transversale représentée à la figure 2 et réalisée selon la ligne II-II de la figure 1 et perpendiculaire

aux faces de contact 2 de deux blocs 1, on distingue la présence en surface de la couche de matériau de recouvrement MR sur les faces latérales 13 et 15 limitant les rainures d'orientation transversale 3.

Les éléments de sculpture représentés comportent une couche de matériau de recouvrement sur toutes leurs faces latérales, mais pour obtenir une amélioration de l'adhérence sur sol enneigé, ce sont les faces latérales dont l'orientation est normale à la direction circonférentielle du pneumatique ou dont l'orientation comporte une composante normale à la direction circonférentielle qui doivent préférentiellement être recouvertes d'une telle couche de matériau de recouvrement.

Selon ce mode de réalisation de l'invention, le matériau de recouvrement s'étend, à l'état neuf, jusqu'à l'arête formée par la limite entre la face de contact et la face latérale de l'élément de sculpture.

L'épaisseur E1 de la couche du matériau de recouvrement MR est de préférence supérieure à 0,1 mm, plus préférentiellement comprise entre 0,25 et 3,5 mm selon les applications.

Selon un autre mode de réalisation (non représenté) de l'invention, le matériau de recouvrement s'étend radialement, à l'état neuf, à partir du fond de la découpure, jusqu'à une distance Hr de 4 mm. Ce mode de réalisation est utile pour redonner à un pneumatique neige un surcroit d'adhérence sur sol enneigé lorsque le reste de la bande de roulement a été usé. Ce surcroit d'adhérence est particulièrement net lorsque les matériaux de recouvrements sont disposés sur des faces latérales normales à la direction circonférentielle du pneumatique ou dont l'orientation comporte une composante normale à la direction circonférentielle du pneumatique.

## IV. Fabrication d'une bande de roulement avec couche de recouvrement

### A. Fabrication d'une couche de recouvrement

La première étape de la fabrication d'une bande de roulement avec couche de recouvrement est de préparer la couche de recouvrement.

Après avoir choisi et mis aux dimensions appropriées un assemblage de fibres, tissé ou intissé, on imprègne cet assemblage de fibres avec une ou deux couches de matériau élastomère selon l'épaisseur de la couche de recouvrement à préparer et les natures de l'assemblage de fibres et du matériau élastomère.

Cette imprégnation peut se faire à chaud et sous pression dans un moule par exemple.

### B. Moulage d'une bande de roulement avec couche de recouvrement

Dans la description qui va suivre, des éléments sensiblement identiques ou similaires seront désignés par des références identiques. Un moyen d'obtention d'une telle sculpture de bande de roulement consiste par exemple à recouvrir l'ensemble d'une ébauche de bande de roulement réalisée dans un mélange de base avec une couche de matériau de recouvrement d'épaisseur appropriée avant de procéder au moulage de la bande de roulement et des rainures et des incisions. Après moulage, le mélange de recouvrement se trouvant sur la face de contact de la nervure peut être laissé en place ou bien éliminé par un moyen mécanique (notamment par un meulage).

Un autre mode réalisation industrielle d'une bande de roulement selon l'invention, peut consister à déposer, sur l'ébauche de pneumatique non vulcanisé pourvue d'une bande de roulement en mélange de base non vulcanisé, des bandelettes de matériau de recouvrement différent du mélange de base, comme cela est décrit dans le document EP 0510550 (les bandelettes pouvant être déposées dans la direction circonférentielle et/ou transversale sur la bande de roulement). Une autre manière peut consister à réaliser la bande de roulement par co-extrusion de deux mélanges (ou plus) au moment de l'extrusion de la bande de roulement.

Une méthode de réalisation préférentielle est maintenant décrite. Dans la description qui va suivre, des éléments sensiblement identiques ou similaires seront désignés par des références identiques.

La figure 5 représente un élément moulant 41 conforme à un aspect de l'invention.

Plus particulièrement, l'élément moulant 41 comprend une surface de moulage 43 destinée à mouler une partie de la surface de roulement d'un pneumatique. L'élément moulant 41 comporte également des lames 45 dont une seule est ici représentée pour faciliter la compréhension de l'invention. La lame est ici un cordon 45 destiné à mouler une rainure dans la bande de roulement du pneumatique. Par « rainure » dans une bande de roulement, on entend une découpure dans cette bande dont la largeur, c'est-à-dire la distance séparant deux parois latérales de cette rainure, est supérieure à 2 mm. Le cordon 45 s'étend également en hauteur à partir de cette surface de moulage 43. Le cordon 45 s'étend également en longueur selon une direction d'extension longitudinale X en faisant saillie à partir de la surface de moulage 43. Dans le moule, cette direction peut être une direction circonférentielle qui suit la circonférence du moule. En variante, la direction d'extension longitudinale est une direction transversale perpendiculaire à la direction circonférentielle du moule. Dans une autre variante, cette direction d'extension longitudinale est une direction oblique formant un angle non nul avec la direction circonférentielle et la direction transversale du moule.

La figure 5 représente l'élément moulant 41 vu dans un plan de coupe perpendiculaire à la direction d'extension

X. Dans ce plan de coupe, le cordon 45 présente une section ayant une symétrie par rapport à un axe de symétrie S. L'axe de symétrie S s'étend ici dans la hauteur Hc du cordon 45 et il sépare ce cordon 45 en deux demi-cordons de largeur W/2.

La section du cordon a ici une forme rectangulaire. Par « forme rectangulaire », on entend que la face supérieure du cordon est perpendiculaire aux faces latérales de ce cordon, c'est-à-dire que les faces latérales du cordon font avec la face supérieure de ce cordon un angle compris entre 85° et 95°.

L'invention englobe également le cas où les zones de raccord entre les faces latérales du cordon et la face supérieure de ce cordon sont arrondies ainsi que le cas où les zones de raccord entre les faces latérales du cordon et l'embase sont également arrondies.

Dans des variantes de réalisation complémentaires, la section du cordon peut prendre une autre forme qu'une forme rectangulaire, telle qu'une forme carrée, une forme triangulaire, etc.

On notera également que la section du cordon 45 présente, entre deux points d'intersection A et B du cordon 45 avec la surface de moulage 43, un profil représenté en traits gras sur la figure 5. Ce profil a une longueur de profil Lp telle que Lp=2*(Hc+W/2), c'est-à-dire que la longueur de profil Lp correspond à deux fois la hauteur Hc du cordon 5 auquel on ajoute la largeur W de ce cordon.

Dans l'exemple de la figure 5, les points d'intersection A et B sont facilement déterminables, les parois latérales du cordon 45 étant perpendiculaires à la surface de moulage 43. En variante, dans le cas où les parois latérales du cordon sont raccordées à la surface de moulage 43 par deux zones de raccordement arrondies formant deux arcs de cercle, les points d'intersection A et B correspondent respectivement à l'intersection des arcs de cercle avec des droites passant par les centres des arcs de cercle et séparant ces arcs en deux ½ arcs identiques.

L'élément moulant 41 de la figure 5 présente également deux moyens de découpe 47 disposées de part et d'autre du cordon 45. Ces moyens de découpe s'étendent dans leur longueur selon une direction parallèle à la direction longitudinale X du cordon 45. Par « direction parallèle », on entend que la direction d'extension des moyens de découpe forme un angle compris entre -5° et +5° avec la direction d'extension longitudinale X du cordon. La hauteur Hlc des moyens de découpe est au moins égale à la hauteur Hc du cordon.

Chaque moyen de découpe comporte une extrémité 48 apte à découper une couche 49 d'un matériau de recouvrement, ce matériau de recouvrement couvrant une ébauche crue 51 d'une bande de roulement d'un pneumatique. Plus particulièrement, chaque moyen de découpe comporte à son extrémité une arête de découpe (représentée par une pointe sur la figure 5). Cette arête de découpe présente dans le plan de la figure 5, un angle $\alpha$ inférieur ou égal à 60° (voir le médaillon associé à la figure 5 constituant un agrandissement de l'extrémité d'un des deux moyens de découpe 47). Dans un mode de réalisation préférentiel, l'angle $\alpha$ est inférieur ou égal à 35°.

On notera que cette arête de découpe peut avoir été préalablement durcie pour améliorer sa tenue mécanique dans le temps. Par exemple, l'arête de découpe peut avoir été durcie lors d'un traitement thermique particulier. En variante, il est possible de prévoir que le matériau constituant l'arête de découpe soit plus résistant que le reste de l'élément moulant.

On notera également que les moyens de découpe 47 sont disposés dans l'élément moulant 41 de sorte que la distance D entre chaque extrémité des moyens de découpe et l'axe de symétrie S de la section du cordon 45 est inférieure ou égale à la moitié de la longueur Lp du profil de la section, telle que D=Hc+W/2. Dit autrement, l'axe de symétrie S intersecte le profil du cordon 45 en un point C pour définir deux sous-profils. Un premier sous-profil correspond au segment A-C et un second sous-profil correspond au segment B-C. Pour chaque moyen de coupe, la distance entre l'arête de ce moyen de coupe et l'axe de symétrie S est inférieure ou égale à la longueur du sous-profil adjacent à ce moyen de coupe, c'est-à-dire le sous-profil appartenant au demi-cordon le plus proche du moyen de coupe. Dans l'exemple de la figure 5, le sous-profil le plus proche du moyen de coupe 47 est le sous-profil correspondant au segment B-C.

Les figures 6a à 6dc illustrent plus en détails les différentes étapes pour la mise en place du matériau de recouvrement dans une rainure de la bande de roulement.

La figure 6a divulgue notamment une première étape dans laquelle l'élément moulant 41 et l'ébauche crue 49 se rapprochent. Ce rapprochement, est par exemple, initié par une membrane (non représentée) dans le moule. Cette membrane sous l'action d'une quantité de vapeur mise sous pression se gonfle et vient repousser l'ébauche crue vers l'élément moulant 41. Plus particulièrement, la figure 6a présente l'instant où les moyens de découpe 47 viennent découper le matériau de recouvrement 49. Cette étape de découpe est facilitée par l'action des arêtes coupantes des moyens de découpe.

La figure 6b illustre une seconde étape dans laquelle le cordon 45 vient enfoncer l'ébauche crue 51. Plus particulièrement, dans cette étape le cordon 45 vient en contact contre une partie 53 de matériau découpée dans la couche de matériau de recouvrement. Le cordon 45 vient ainsi entraîner cette partie 53 dans la profondeur de l'ébauche crue 51.

On notera ici que la hauteur Hlc des moyens de découpe 47 est supérieure à la hauteur Hc du cordon 45. Ainsi l'étape de découpe de la figure 6a est antérieure à l'étape d'enfoncement de l'ébauche crue 51 par le cordon 45. En

variante, il est possible de prévoir que la hauteur Hlc des moyens de découpe 47 soit identique à la hauteur Hc du cordon 5. Dans ce cas l'étape de la figure 6a et l'étape de la figure 6b ont lieu au même instant.

La figure 6c illustre une troisième étape dans laquelle le cordon 45 vient enfoncer l'ébauche crue sur toute sa hauteur Hc. L'ensemble de la partie 53 du matériau de recouvrement se retrouve alors dans l'ébauche crue. Une fois cette étape réalisée, il est alors possible de réaliser la vulcanisation de l'ébauche crue, c'est-à-dire le passage de l'état plastique à l'état élastique du matériau caoutchoutique constituant l'ébauche crue.

La figure 6d représente le résultat des différentes étapes de moulage et de vulcanisation de l'ébauche crue illustrée aux figures 6a à 6c. La partie de la bande de roulement 55 ainsi obtenue comprend une rainure 57 obtenue par un moulage de caoutchouc autour du cordon 45 et deux incisions 59 obtenues par un moulage de caoutchouc autour des deux moyens de découpe 47. On notera ici que l'ensemble des parois de la rainure, c'est-à-dire les parois latérales et la paroi de fond encadrée par les parois latérales, sont recouvertes par la partie découpée 53 du matériau de recouvrement.

## V. Essais

Plusieurs essais de réalisation de pneumatiques avec des bandes de roulement comportant des couches de recouvrement dans les découpures ont été réalisés.

Le tableau 1 décrit les différents essais réalisés.

Le tableau 2 donne les formulations des matériaux élastomères utilisés, et le tableau 3 présente les résultats de tests de frottement réalisés.

Tableau 1

| | A1 | A2 | A3 | A4 | A5 |
|---|---|---|---|---|---|
| Assemblage de fibres | Tissu de coton (1) | Tissu de coton (1) | Feutre de viscose (2) | Feutre de viscose (2) | Feutre de viscose (2) |
| Matériau élastomère | ME1 | ME2 | ME2 | ME2 | ME2 |
| Empilage | bande de coton 1 couche de matériau élastomère | bande de coton 1 couche de matériau élastomère | 1 mm de feutrine 2 couches de matériau élastomère | 1 mm de feutrine 2 couches de matériau élastomère | 1 mm de feutrine 1 couche de matériau élastomère |
| Conditions d'imprégnation | T = 160°C<br>P=16 bars<br>T=9 minutes | T = 160°C<br>P=16 bars<br>T=9 minutes | T = 160°C<br>P=16 bars<br>T=11 minutes | T = 160°C<br>P=16 bars<br>T=20 minutes | T = 160°C<br>P=16 bars<br>T=9 minutes |
| (1) Tissu de coton (Coco coupon, Cournon-d'Auvergne)<br>(2) Feutre de viscose, 100% viscose, 275 g/m$^2$, épaisseur : 1 mm (www.feutrine-express.fr). | | | | | |

Tableau 2

| | ME1 (pce) | ME2 (pce) |
|---|---|---|
| NR (1) | 40,0 | |
| SBR (2) | 60,0 | |
| SBR (3) | | 100,0 |
| Noir de carbone (4) | 37,5 | 10,0 |
| Plastifiant liquide (5) | 2,0 | |
| Plastifiant liquide (6 | | 10,0 |
| Résine plastifiante (7) | | 17,1 |
| ZnO (8) | 10 | 1,5 |
| Acide stéarique (9) | 1,0 | 3,0 |

(suite)

| | ME1 (pce) | ME2 (pce) |
|---|---|---|
| 6PPD (10) | 2,0 | 2,2 |
| Soufre | 27,0 | 1,4 |
| CBS (11) | 13,5 | 1,6 |

(1) Caoutchouc naturel (RSS#3) ;
(2) SBR solution (taux exprimés en SBR sec : 23% de styrène, 15 % des motifs polybutadiène en 1-2 et 70% des motifs polybutadiène en 1-4 trans (Tg = - 52°C) ;
(3) SBR solution (taux exprimés en SBR sec : 44% de styrène, 41 % des motifs polybutadiène en 1-2 (Tg = - 12°C) ;
(4) Noir de carbone N234 ;
(5) Huile MES ("Catenex SNR" de Shell)
(6) Huile TDAE « Vivatec 500 » de la société Hansen & Rosenthal
(7) résine hydrocarbonée type C5 (« Wingtack 86 » de la société Crayvalley) ;
(8) oxyde de zinc (grade industriel - société Umicore) ;
(9) stéarine (« Pristerene » de la société Uniquema) ;
(10) N-1,3-diméthylbutyl-N-phénylparaphénylénediamine (« Santoflex 6-PPD » de la société Flexsys) ; DPG = Diphénylguanidine (« Perkacit DPG » de la société Flexsys) ;
(11) N-cyclohexyl-2-benzothiazyl-sulfénamide (« Santocure CBS » de la société Flexsys).

Le premier essai A1 a été réalisé avec une couche de recouvrement constituée d'un tissu de fibres de coton comme assemblage de fibres et d'une couche d'un mélange diénique ME1 fortement chargé en soufre comme matériau élastomère d'imprégnation.

L'assemblage a été placé dans une presse à plateaux sous une pression de 16 bars, à une température de 160°C pendant une durée de 9 minutes pour réaliser l'imprégnation du tissu par le mélange. L'épaisseur finale de la couche de recouvrement a été de l'ordre de 0,6 mm.

Après l'imprégnation, des bandes de couche de recouvrement ont été placées à la surface d'une ébauche de bande de roulement d'un bandage pneumatique. Il est à noter qu'une partie des fils de coton (les fils de chaîne ou de trame) a été orientés perpendiculairement à la direction du déplacement prévue lors du moulage pour qu'ils s'opposent à toute extension de la couche de recouvrement pendant le moulage.

Il est préférable de placer le tissu de coton du côté du moule et non du côté de l'ébauche de la bande de roulement pour faciliter la découpe du tissu et le glissement de la couche de recouvrement jusqu'à sa position dans la découpure.

L'ensemble a alors été placé dans un moule, et les opérations de moulage telles que décrites aux figures 6a à 6d se sont alors déroulées sans difficulté, le tissu de coton a permis une mise en place précise de la couche de recouvrement dans les découpures de la bande de roulement. En particulier, le tissu de coton, très fin, a pu être coupé sans difficulté par les lames 47 et le cordon 45 a entraîné comme prévu la couche de recouvrement dans la découpure 3, 4, 57 de la bande de roulement.

Le matériau élastomère ME1, très chargé en soufre, a un comportement à cru ou avec une pré-vulcanisation limitée obtenue lors de l'imprégnation à chaud et sous pression usuelle.

Le taux de soufre supérieur à 20 pce permet d'obtenir un matériau de la couche de recouvrement de très haut module (module d'extension à une déformation de 3% de l'ordre de 300 à 1000 MPa) ce qui est très favorable à l'adhérence sur sol enneigé.

Le deuxième essai A2 a été lui aussi réalisé avec un tissu de coton comme assemblage de fibres, mais avec un mélange de haute Tg ME2.

Les conditions d'imprégnation ont été identiques à celles du premier essai, le tissu de coton a été placé du côté du moule et le matériau ME2 a été prévulcanisé lors de l'imprégnation.

Le moulage s'est bien passé comme précédemment.

Les trois autres essais ont été réalisés avec une feutrine ou feutre de viscose comme assemblage de fibres et une ou deux couches de mélange diénique ME2 comme matériau élastomère d'imprégnation.

Le feutre de viscose utilisé a une densité de 0,275. Des essais complémentaires réalisés avec un feutre de viscose de densité de 0,145, plus faible, ont aussi donné satisfaction quant au moulage de la couche de recouvrement. Il est souhaitable que cette densité soit supérieure à 0,10.

Pour l'essai A3, le feutre de viscose a été placé en sandwich entre deux couches de mélanges ME2 dans des conditions identiques de température et de pression et pendant 11 minutes. Cela a permis une bonne imprégnation du feutre par le mélange. L'épaisseur finale de la couche de recouvrement a été de 1,1 mm.

Les opérations de moulage se sont bien déroulées. Cela indique que la rigidité intrinsèque du feutre de viscose à été suffisante pour assurer un glissement aisé de la couche de recouvrement et sa non extension lors de ce glissement puisque cette couche s'est retrouvée exactement dans l'ensemble de la découpure comme indiqué.

L'essai A4 a été très proche, avec comme seule modification une durée d'imprégnation plus longue de 20 minutes au lieu de 11. Cela a augmenté sensiblement la prévulcanisation du mélange élastomère et on a noté une plus grande facilité de glissement de la couche de recouvrement sur l'ébauche crue de la bande de roulement.

Pour l'essai A5, seule une couche de mélange diénique ME2 a été utilisée pour imprégner le feutre de viscose. La durée de l'opération d'imprégnation a été de 9 minutes. L'épaisseur finale de la couche de recouvrement a été de l'ordre de 0,6 mm.

Cet essai de moulage s'est aussi bien déroulé.

Des couches de recouvrement similaires à celles des essais A3, A4 et A5 ont aussi été utilisées pour réaliser des éprouvettes de test similaires à celles décrites aux figures 3 et 4. Trois épaisseurs de couches de recouvrement ont été obtenues : de 1,1 mm, 0,8 mm et 0,5 MM. Le moulage de ces éprouvettes a été tel que chaque bloc de sculpture présente une couche du matériau de recouvrement sur une seule de ses arêtes. Cette arête est orientée axialement.

Une éprouvette témoin a été réalisée en utilisant comme mélange de base une composition de bande de roulement de type « neige ». Le même mélange a été utilisé comme mélange de base pour les éprouvettes de test.

Des essais de frottement sur sol enneigé ont été effectués avec ces éprouvettes et les résultats sont donnés dans le tableau 3 en valeur relative. Une valeur de 100 est affectée au résultat pour l'éprouvette témoin, une valeur supérieur à 100 indique un coefficient de frottement supérieur donc une performance d'adhérence plus élevée. Une valeur inférieure à 100 indique un coefficient de frottement pour l'essai inférieur au témoin.

Le mélange ME2 est un mélange à base d'un SBR de très haute température de transition vitreuse Tg = -12°C. La composition présente un module dynamique de cisaillement G* de l'ordre de 275 MPa à une température de -10°C ce qui procure aux arêtes des éprouvettes une très haute rigidité à cette température très basse. Cette composition a aussi un module dynamique de cisaillement beaucoup plus bas à une température de 60°C, inférieure à 0,4 MPa.

Tableau 3

| Échantillon de pain de sculpture | Témoin | A3 | A4 | A5 |
|---|---|---|---|---|
| Épaisseur de la couche de recouvrement (mm) | -- | 1,1 | 0,8 | 0,5 |
| Coefficient de frottement | 100 | 110 | 106 | 104 |

Les résultats obtenus indiquent tout l'intérêt d'une couche de recouvrement réalisée avec un matériau de haut module à basse température. On constate aussi que l'effet de cette couche de recouvrement de haute rigidité est d'autant plus marqué que l'épaisseur de la couche de recouvrement est forte.

## Revendications

1. Bande de roulement pour bandage pneumatique comprenant :

    • une pluralité d'éléments de sculpture (1) comprenant des faces latérales (13, 14, 15, 16) et une face de contact (2) destinée à venir en contact avec la chaussée pendant le roulage d'un pneumatique pourvu de ladite bande, la limite du contact de la face de contact avec le sol formant au moins une arête (23, 24, 25, 26);
    • une pluralité de découpures (3, 4) sous la forme de rainure et/ou d'incision, lesdites découpures étant délimitées par des faces latérales en vis-à-vis ;
    • chaque élément de sculpture étant formé avec au moins un premier mélange caoutchouteux dit mélange de base (MB);

    ladite bande de roulement ayant, vue en coupe dans un plan normal à l'axe de rotation dudit bandage pneumatique et traversant au moins une face de contact d'un élément de sculpture, au moins une des découpures adjacentes à ladite face de contact recouverte au moins en partie avec une couche de recouvrement, la couche de recouvrement comportant un assemblage de fibres, tissé ou intissé, **caractérisé en ce que** les fibres dudit assemblage de fibres sont des fibres longues, de longueur supérieure à 50 mm.

2. Bande de roulement selon la revendication 1, dans laquelle, la couche de recouvrement comportant un matériau élastomère, l'assemblage de fibres est imprégné par ledit matériau élastomère.

3. Bande de roulement selon l'une quelconque des revendications précédentes, dans laquelle l'assemblage de fibres est un assemblage bidimensionnel desdites fibres.

4. Bande de roulement selon la revendication 3, dans laquelle l'assemblage bidirectionnel est un intissé.

5. Bande de roulement selon la revendication 3, dans laquelle l'assemblage bidirectionnel est un tissu.

6. Bande de roulement selon l'une quelconque des revendications 1 et 2, dans laquelle l'assemblage de fibres est un assemblage tri-directionnel de fibres longues.

7. Bande de roulement selon la revendication 6, dans laquelle l'assemblage tri-directionnel de fibres est un feutre.

8. Bande de roulement selon l'une quelconque des revendications précédentes, dans laquelle les fibres dudit assemblage de fibres sont choisies dans le groupe des fibres textiles, des fibres minérales et de leurs mélanges.

9. Bande de roulement selon la revendication 8, dans laquelle, les fibres comportent des fibres choisies dans le groupe des fibres de soie, de coton et de laine.

10. Bande de roulement selon l'une des revendications 8 ou 9, dans laquelle les fibres longues comportent des fibres choisies dans le groupe des fibres de cellulose, de polyamide, d'aramide, de polyéthylène, de polypropylène, de polyacrylonitrile, de polyimide, de polysulfones, de polyéther sulfones, de polyuréthannes, d'alcool polyvinylique, de polyester et de chlorure de polyvinyle.

11. Bande de roulement selon la revendication 10, dans laquelle les fibres de polyester comportent des fibres choisies dans le groupe des fibres de polyéthylène téréphtalate, de polybutylène téréphtalate et de polyéthylène naphtalate.

12. Bande de roulement selon l'une quelconque des revendications précédentes, dans laquelle les fibres longues comportent des fibres minérales choisies dans le groupe des fibres de verre, de carbone et de basalte.

13. Bande de roulement selon l'une quelconque des revendications 2 à 12, dans laquelle la densité apparente de l'assemblage de fibres avant imprégnation d'un matériau élastomère est inférieure à 0,4 et de préférence inférieur à 0,25.

14. Bande de roulement selon l'une quelconque des revendications 2 à 13, dans laquelle le matériau élastomère est une composition à base d'au moins un élastomère diénique.

15. Bande de roulement selon la revendication 14, dans laquelle l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

16. Bande de roulement selon l'une des revendications 14 et 15, dans laquelle la composition est fortement chargée en soufre.

17. Bande de roulement selon la revendication 16, dans laquelle la composition comporte plus de 20 parties pour cent parties d'élastomère de soufre.

18. Bande de roulement selon l'une quelconque des revendications 2 à 13, dans laquelle le matériau élastomère est à base d'au moins un élastomère thermoplastique, ledit élastomère thermoplastique étant un copolymère bloc comprenant au moins un bloc élastomère et au moins un bloc thermoplastique.

19. Bande de roulement selon la revendication 18, dans laquelle le ou les blocs élastomères du copolymère bloc sont choisis parmi les élastomères ayant une température de transition vitreuse inférieure à 25°C.

20. Bande de roulement selon l'une quelconque des revendications 18 et 19, dans laquelle le ou les blocs élastomères du copolymère bloc sont choisis dans le groupe constitué par les élastomères éthyléniques, les élastomères diéniques et leurs mélanges.

21. Bande de roulement selon la revendication 20, dans laquelle le ou les blocs élastomères du copolymère bloc sont

des élastomères diéniques issus de l'isoprène, du butadiène ou d'un mélange de ces derniers.

**22.** Bande de roulement selon l'une quelconque des revendications 18 à 21, dans lequel le ou les blocs thermoplastiques du copolymère bloc sont choisis parmi les polymères ayant une température de transition vitreuse supérieure à 80°C, et, dans le cas d'un bloc thermoplastique semi cristallin, une température de fusion supérieure à 80°C.

**23.** Bande de roulement selon l'une quelconque des revendications 18 à 22, dans lequel le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques et leurs mélanges.

**24.** Bande de roulement selon l'une quelconque des revendications 18 à 23, dans lequel le ou les blocs thermoplastiques du copolymère bloc sont choisis parmi les polystyrènes.

**25.** Bande de roulement selon l'une quelconque des revendications 18 à 24, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

**26.** Bande de roulement selon l'une quelconque des revendications 18 à 25, dans lequel l'assemblage de fibres est imprégné par un matériau comportant en plus au moins un agent plastifiant.

**27.** Bande de roulement selon l'une quelconque des revendications 2 à 26, dans laquelle le module dynamique de cisaillement G* du matériau élastomère soumis à une contrainte maximale alternée de 0,7 MPa, à une fréquence de 10 Hz et à une température de -10°C est supérieur à 100 MPa et de préférence supérieur 200 MPa.

**28.** Bande de roulement selon l'une quelconque des revendications précédentes, dans laquelle l'épaisseur de la couche de recouvrement est comprise entre 0,4 et 3,5 mm.

**29.** Bande de roulement selon la revendication 28, dans laquelle l'épaisseur de la couche de recouvrement est comprise entre 0,4 et 1,0 mm.

**30.** Bande de roulement selon la revendication 28, dans laquelle l'épaisseur du matériau de recouvrement est comprise entre 2,0 et 3,0 mm.

**31.** Bande de roulement selon l'une quelconque des revendications précédentes, dans laquelle la couche de recouvrement s'étend, à partir du fond de la découpure, sur une hauteur Hr au moins égale à 4 mm de la hauteur H de ladite face latérale.

**32.** Bande de roulement selon la revendication 31, dans laquelle la couche de recouvrement s'étend, à l'état neuf, jusqu'à l'arête formée par la limite entre la face de contact et la face latérale dudit élément de sculpture.

## Patentansprüche

**1.** Lauffläche für einen Luftreifen, umfassend:

- mehrere Profilelemente (1), welche Seitenflächen (13, 14, 15, 16) und eine Kontaktfläche (2), die dazu bestimmt ist, während des Rollens eines mit der Lauffläche versehenen Reifens mit der Fahrbahn in Kontakt zu kommen, umfassen, wobei die Grenze des Kontakts der Kontaktfläche mit dem Boden wenigstens eine Kante (23, 24, 25, 26) bildet;
- mehrere Ausschnitte (3, 4) in Form von Rillen und/oder Einschnitten, wobei die Ausschnitte von gegenüberliegenden Seitenflächen begrenzt werden;
- wobei jedes Profilelement mit wenigstens einer ersten Kautschukmischung, Basismischung (BM) genannt, hergestellt ist,

wobei in der Lauffläche, im Schnitt in einer Ebene gesehen, die zur Drehachse des Luftreifens senkrecht ist und

wenigstens eine Kontaktfläche eines Profilelements durchquert, wenigstens einer der Ausschnitte, die der Kontaktfläche benachbart sind, wenigstens teilweise mit einer Deckschicht bedeckt ist, wobei die Deckschicht ein gewebtes oder als Vlies ausgebildetes Faseraggregat aufweist, **dadurch gekennzeichnet, dass** die Fasern des Faseraggregats Langfasern sind, mit einer Länge von mehr als 50 mm.

**2.** Lauffläche nach Anspruch 1, wobei, während die Deckschicht ein Elastomermaterial aufweist, das Faseraggregat mit dem Elastomermaterial imprägniert ist.

**3.** Lauffläche nach einem der vorhergehenden Ansprüche, wobei das Faseraggregat ein zweidimensionales Aggregat der Fasern ist.

**4.** Lauffläche nach Anspruch 3, wobei das bidirektionale Aggregat ein Vlies ist.

**5.** Lauffläche nach Anspruch 3, wobei das bidirektionale Aggregat ein Gewebe ist.

**6.** Lauffläche nach einem der Ansprüche 1 und 2, wobei das Faseraggregat ein tridirektionales Aggregat von Langfasern ist.

**7.** Lauffläche nach Anspruch 6, wobei das tridirektionale Aggregat von Fasern ein Filz ist.

**8.** Lauffläche nach einem der vorhergehenden Ansprüche, wobei die Fasern des Faseraggregats aus der Gruppe der Textilfasern, der Mineralfasern und ihrer Mischungen ausgewählt sind.

**9.** Lauffläche nach Anspruch 8, wobei die Fasern Fasern umfassen, die aus der Gruppe der Seide-, Baumwoll- und Wollfasern ausgewählt sind.

**10.** Lauffläche nach einem der Ansprüche 8 oder 9, wobei die Langfasern Fasern umfassen, die aus der Gruppe der Cellulose-, Polyamid-, Aramid-, Polyethylen-, Polypropylen-, Polyacrylnitril-, Polyimid-, Polysulfon-, Polyethersulfon-, Polyurethan-, Polyvinylalkohol-, Polyester- und Polyvinylchloridfasern ausgewählt sind.

**11.** Lauffläche nach Anspruch 10, wobei die Polyesterfasern Fasern umfassen, die aus der Gruppe der Polyethylenterephthalat-, Polybutylenterephthalat- und Polyethylennaphthalatfasern ausgewählt sind.

**12.** Lauffläche nach einem der vorhergehenden Ansprüche, wobei die Langfasern Mineralfasern umfassen, die aus der Gruppe der Glasfasern, Kohlenstofffasern und Basaltfasern ausgewählt sind.

**13.** Lauffläche nach einem der Ansprüche 2 bis 12, wobei die scheinbare Dichte des Faseraggregats vor Imprägnierung mit einem Elastomermaterial kleiner als 0,4 und vorzugsweise kleiner als 0,25 ist.

**14.** Lauffläche nach einem der Ansprüche 2 bis 13, wobei das Elastomermaterial eine Zusammensetzung auf der Basis wenigstens eines Dienelastomers ist.

**15.** Lauffläche nach Anspruch 14, wobei das Dienelastomer aus der Gruppe ausgewählt ist, die aus Polybutadienen, Naturkautschuk, Synthesepolyisoprenen, Butadien-Copolymeren, Isopren-Copolymeren und den Mischungen dieser Elastomere besteht.

**16.** Lauffläche nach einem der Ansprüche 14 und 15, wobei die Zusammensetzung stark mit Schwefel angereichert ist.

**17.** Lauffläche nach Anspruch 16, wobei die Zusammensetzung mehr als 20 Teile Schwefel pro hundert Teile Elastomer aufweist.

**18.** Lauffläche nach einem der Ansprüche 2 bis 13, wobei das Elastomermaterial auf der Basis wenigstens eines thermoplastischen Elastomers hergestellt ist, wobei das thermoplastische Elastomer ein Blockcopolymer ist, das wenigstens einen Elastomerblock und wenigstens einen thermoplastischen Block umfasst.

**19.** Lauffläche nach Anspruch 18, wobei der Elastomerblock oder die Elastomerblöcke des Blockcopolymers aus den Elastomeren ausgewählt sind, die eine Glasübergangstemperatur von weniger als 25 °C aufweisen.

**20.** Lauffläche nach einem der Ansprüche 18 und 19, wobei der Elastomerblock oder die Elastomerblöcke des Blockcopolymers aus der Gruppe ausgewählt sind, die aus Ethylenelastomeren, Dienelastomeren und ihren Mischungen besteht.

**21.** Lauffläche nach Anspruch 20, wobei der Elastomerblock oder die Elastomerblöcke des Blockcopolymers Dienelastomere sind, die aus Isopren, aus Butadien oder aus einer Mischung dieser Letzteren hervorgegangen sind.

**22.** Lauffläche nach einem der Ansprüche 18 bis 21, wobei der thermoplastische Block oder die thermoplastischen Blöcke des Blockcopolymers aus den Polymeren ausgewählt sind, die eine Glasübergangstemperatur von mehr als 80 °C und, im Falle eines teilkristallinen thermoplastischen Blocks, eine Schmelztemperatur von mehr als 80 °C aufweisen.

**23.** Lauffläche nach einem der Ansprüche 18 bis 22, wobei der thermoplastische Block oder die thermoplastischen Blöcke des Blockcopolymers aus der Gruppe ausgewählt sind, die aus Polyolefinen, Polyurethanen, Polyamiden, Polyestern, Polyacetalen, Polyethern, Phenylenpolysulfiden, Polyfluorverbindungen, Polystyrolen, Polycarbonaten, Polysulfonen, Polymethylmethacrylat, Polyetherimid, thermoplastischen Copolymeren und ihren Mischungen besteht.

**24.** Lauffläche nach einem der Ansprüche 18 bis 23, wobei der thermoplastische Block oder die thermoplastischen Blöcke des Blockcopolymers aus Polystyrolen ausgewählt sind.

**25.** Lauffläche nach einem der Ansprüche 18 bis 24, wobei das thermoplastische Elastomer oder die thermoplastischen Elastomere aus der Gruppe ausgewählt sind, die aus den thermoplastischen Elastomeren Styrol/Butadien (SB), Styrol/Isopren (SI), Styrol/Butadien/Isopren (SBI), Styrol/Butadien/Styrol (SBS), Styrol/Isopren/Styrol (SIS), Styrol/Butadien/Isopren/Styrol (SBIS) und den Mischungen dieser Copolymere besteht.

**26.** Lauffläche nach einem der Ansprüche 18 bis 25, wobei das Faseraggregat mit einem Material imprägniert ist, das außerdem wenigstens einen Weichmacher umfasst.

**27.** Lauffläche nach einem der Ansprüche 2 bis 26, wobei der dynamische Schermodul $G^*$ des Elastomermaterials, das einer maximalen Wechselbeanspruchung von 0,7 MPa bei einer Frequenz von 10 Hz und bei einer Temperatur von -10 °C ausgesetzt wird, größer als 100 MPa und vorzugsweise größer als 200 MPa ist.

**28.** Lauffläche nach einem der vorhergehenden Ansprüche, wobei die Dicke der Deckschicht zwischen 0,4 und 3,5 mm liegt.

**29.** Lauffläche nach Anspruch 28, wobei die Dicke der Deckschicht zwischen 0,4 und 1,0 mm liegt.

**30.** Lauffläche nach Anspruch 28, wobei die Dicke des Abdeckmaterials zwischen 2,0 und 3,0 mm liegt.

**31.** Lauffläche nach einem der vorhergehenden Ansprüche, wobei sich die Deckschicht vom Boden des Ausschnitts aus über eine Höhe Hr von wenigstens 4 mm der Höhe H der Seitenfläche erstreckt.

**32.** Lauffläche nach Anspruch 31, wobei sich die Deckschicht im neuen Zustand bis zu der Kante erstreckt, die von der Grenze zwischen der Kontaktfläche und der Seitenfläche des Profilelements gebildet wird.

**Claims**

**1.** Tread for a pneumatic tyre, comprising:

- a plurality of tread pattern elements (1) comprising lateral faces (13, 14, 15, 16) and a contact face (2) which is intended to come into contact with the road surface when a tyre provided with the said tread is being driven on, the limit of the contact between the contact face and the ground forming at least one edge corner (23, 24, 25, 26);
- a plurality of cuts (3, 4) in the form of grooves and/or sipes, the said cuts being delimited by opposing lateral faces;
- each tread pattern element being formed with at least one first rubber compound referred to as a base compound (MB);

the said tread having, viewed in cross section in a plane normal to the axis of rotation of the said pneumatic tyre and passing through at least one contact face of a tread pattern element, at least one of the cuts adjacent to the said contact face covered at least in part with a covering layer, the covering layer containing a woven or nonwoven fibre assembly, **characterized in that** the fibres of the said fibre assembly are long fibres, of a length in excess of 50 mm.

**2.** Tread according to Claim 1, in which, with the covering layer containing an elastomeric material, the fibre assembly is impregnated with the said elastomeric material.

**3.** Tread according to either of the preceding claims, in which the fibre assembly is a two-dimensional assembly of the said fibres.

**4.** Tread according to Claim 3, in which the two-directional assembly is a nonwoven.

**5.** Tread according to Claim 3, in which the two-directional assembly is a woven.

**6.** Tread according to either one of Claims 1 and 2, in which the fibre assembly is a three-directional assembly of long fibres.

**7.** Tread according to Claim 6, in which the three-directional fibre assembly is a felt.

**8.** Tread according to any one of the preceding claims, in which the fibres of the said fibre assembly are selected from the group of textile fibres, mineral fibres and blends thereof.

**9.** Tread according to Claim 8, in which the fibres contain fibres selected from the group of silk, cotton and wool fibres.

**10.** Tread according to either of Claims 8 and 9, in which the long fibres contain fibres selected from the group of cellulose, polyamide, aramid, polyethylene, polypropylene, polyacrylonitrile, polyimide, polysulfone, polyether sulfone, polyurethane, polyvinyl alcohol, polyester and polyvinyl chloride fibres.

**11.** Tread according to Claim 10, in which the polyester fibres contain fibres selected from the group of polyethylene terephthalate, polybutylene terephthalate and polyethylene naphthalate fibres.

**12.** Tread according to any one of the preceding claims, in which the long fibres contain mineral fibres selected from the group of glass, carbon and basalt fibres.

**13.** Tread according to any one of Claims 2 to 12, in which the apparent density of the fibre assembly prior to impregnation with an elastomeric material is less than 0.4 and preferably less than 0.25.

**14.** Tread according to any one of Claims 2 to 13, in which the elastomeric material is a composition based on at least one diene elastomer.

**15.** Tread according to Claim 14, in which the diene elastomer is selected from the group consisting of polybutadienes, natural rubber, synthetic polyisoprenes, butadiene copolymers, isoprene copolymers and blends of such elastomers.

**16.** Tread according to either of Claims 14 and 15, in which the composition is highly filled with sulphur.

**17.** Tread according to Claim 16, in which the composition contains more than 20 parts per hundred rubber of sulphur.

**18.** Tread according to any one of Claims 2 to 13, in which the elastomeric material is based on at least one thermoplastic elastomer, the said thermoplastic elastomer being a block copolymer comprising at least one elastomer block and at least one thermoplastic block.

**19.** Tread according to Claim 18, in which the elastomer block or blocks of the block copolymer are selected from elastomers having a glass transition temperature of below 25°C.

**20.** Tread according to either one of Claims 18 and 19, in which the elastomer block or blocks of the block copolymer are selected from the group consisting of ethylene elastomers, diene elastomers and blends thereof.

**21.** Tread according to Claim 20, in which the elastomer block or blocks of the block copolymer are diene elastomers derived from isoprene, butadiene or a blend of these.

**22.** Tread according to any one of Claims 18 to 21, in which the thermoplastic block or blocks of the block copolymer are selected from polymers having a glass transition temperature higher than 80°C and, in the case of a semicrystalline thermoplastic block, a melting point higher than 80°C.

**23.** Tread according to any one of Claims 18 to 22, in which the thermoplastic block or blocks of the block copolymer are selected from the group consisting of polyolefins, polyurethanes, polyamides, polyesters, polyacetals, polyethers, phenylene polysulphides, polyfluorides, polystyrenes, polycarbonates, polysulfones, polymethylmethacrylate, polyetherimide, thermoplastic copolymers and blends thereof.

**24.** Tread according to any one of Claims 18 to 23, in which the thermoplastic block or blocks of the block copolymer are selected from polystyrenes.

**25.** Tread according to any one of Claims 18 to 24, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS) thermoplastic elastomers and blends of such copolymers.

**26.** Tread according to any one of Claims 18 to 25, in which the fibre assembly is impregnated with a material additionally containing at least one plasticizer.

**27.** Tread according to any one of Claims 2 to 26, in which the dynamic shear modulus $G^*$ of the elastomeric material subjected to an alternating maximum stress of 0.7 MPa, at a frequency of 10 Hz and at a temperature of -10°C is greater than 100 MPa and preferably greater than 200 MPa.

**28.** Tread according to any one of the preceding claims, in which the thickness of the covering layer is comprised between 0.4 and 3.5 mm.

**29.** Tread according to Claim 28, in which the thickness of the covering layer is comprised between 0.4 and 1.0 mm.

**30.** Tread according to Claim 28, in which the thickness of the covering material is comprised between 2.0 and 3.0 mm.

**31.** Tread according to any one of the preceding claims, in which the covering layer extends, from the bottom of the cut, over a height Hr at least equal to 4 mm of the height H of the said lateral face.

**32.** Tread according to Claim 31, in which the covering layer extends, in the new condition, as far as the edge corner formed by the boundary between the contact face and the lateral face of the said tread pattern element.

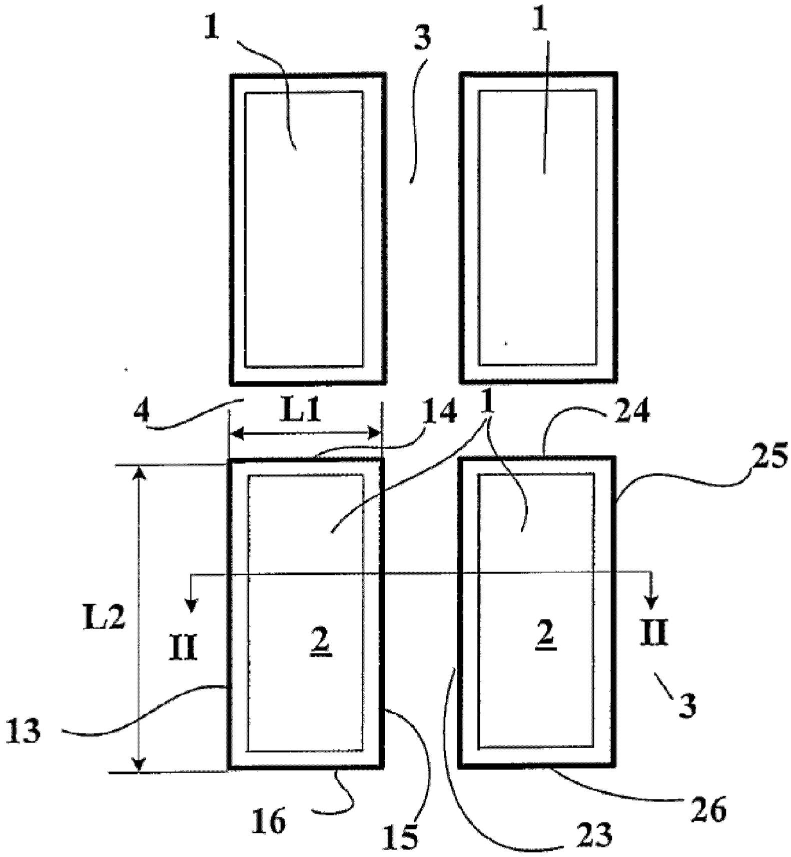


FIG. 1

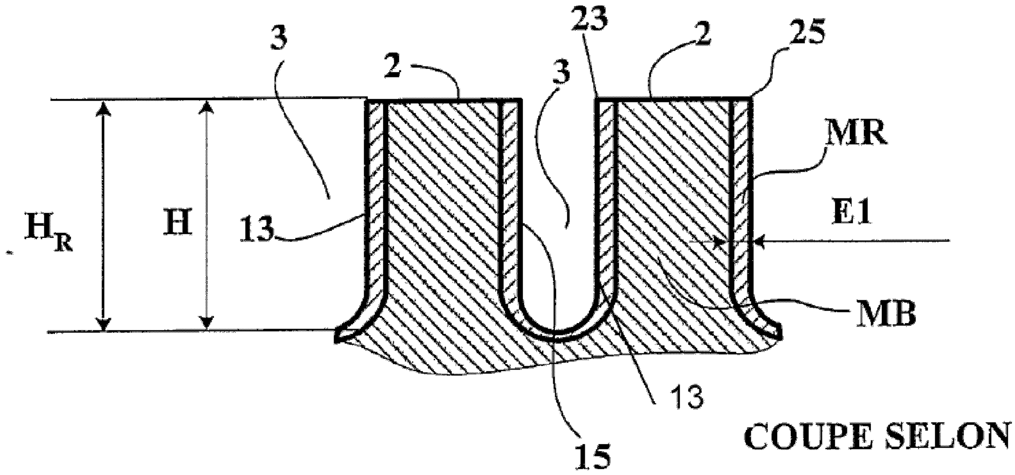


COUPE SELON II-II

FIG. 2

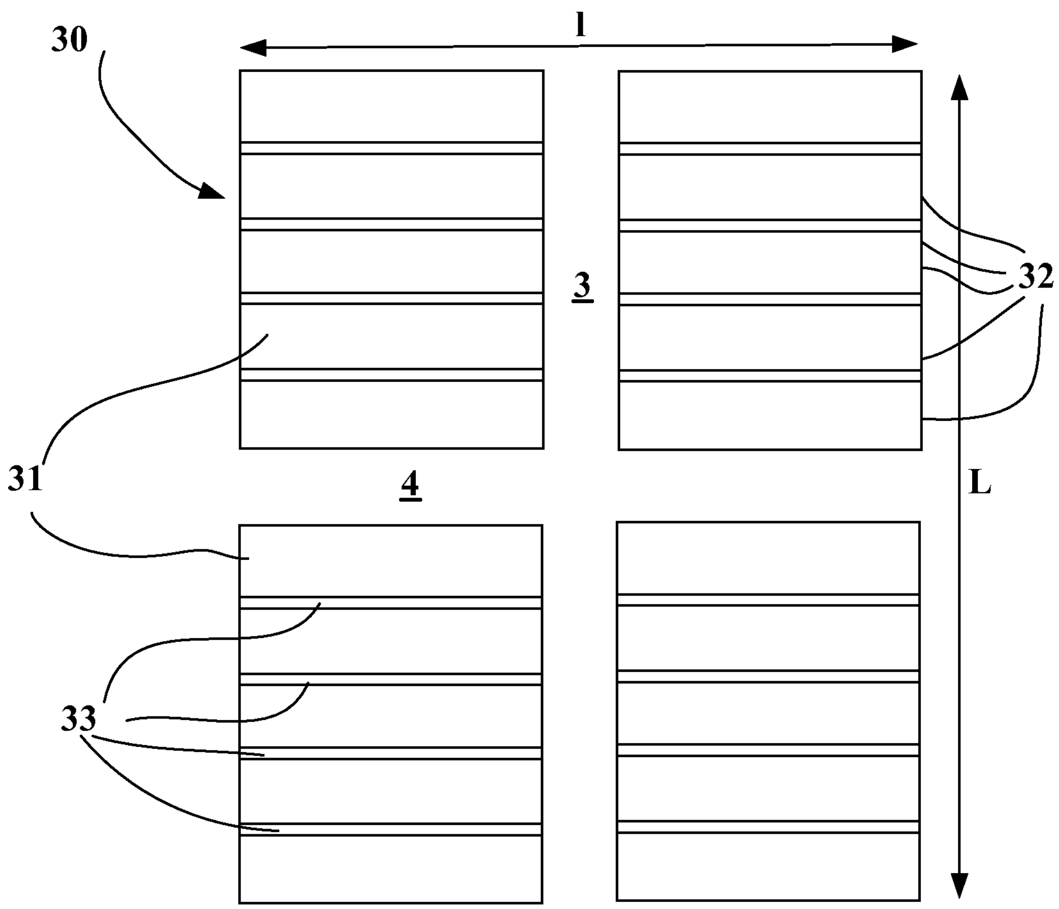


Fig. 3

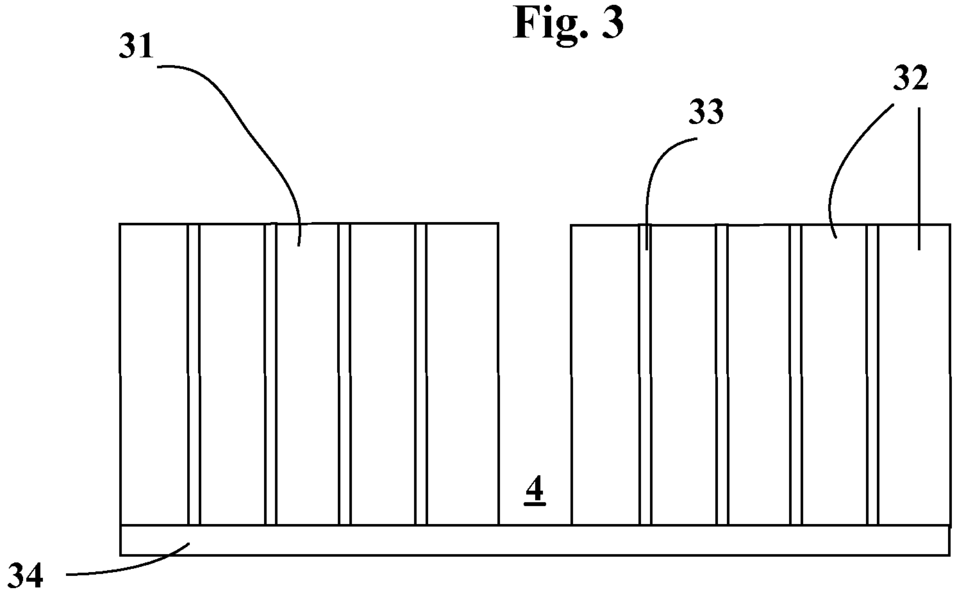


Fig. 4

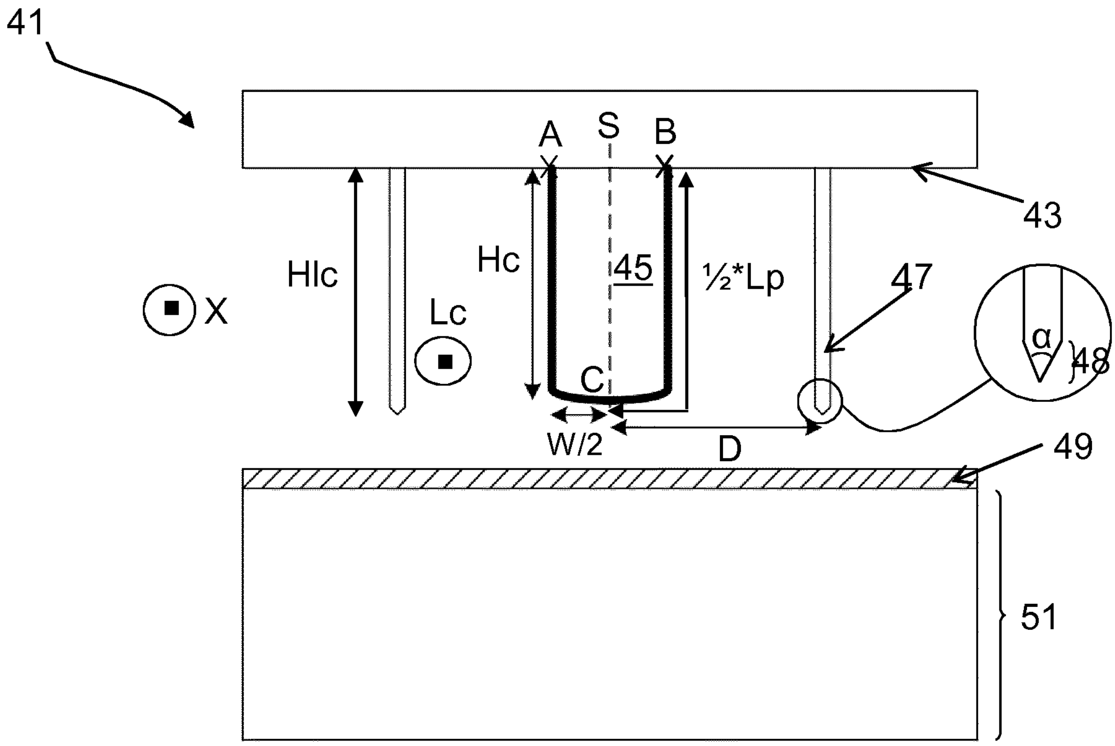


Fig.5

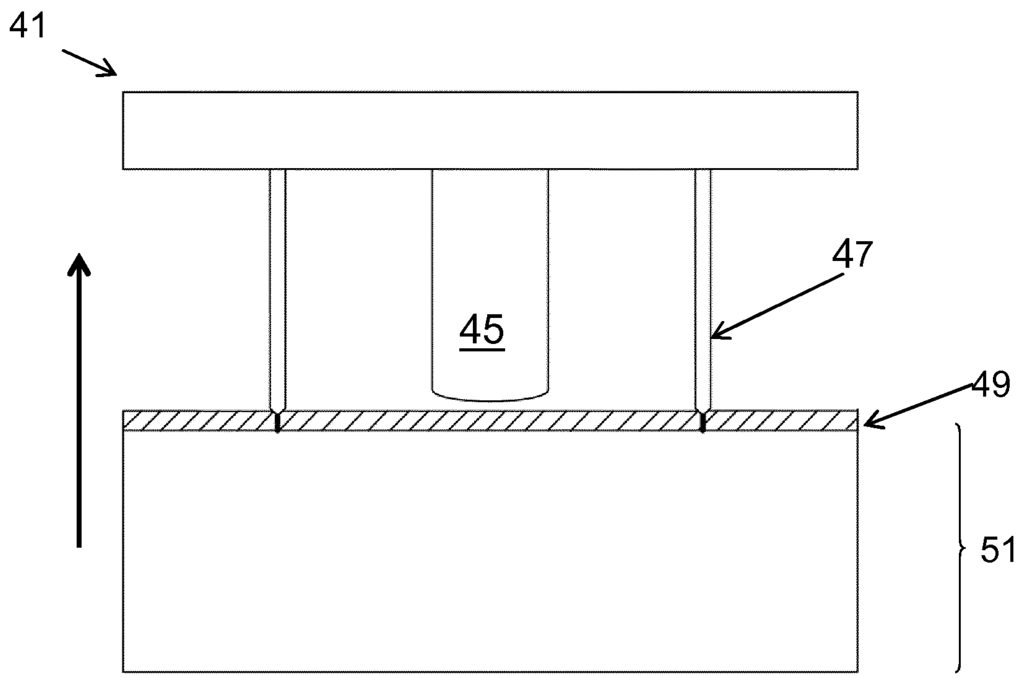


Fig.6a

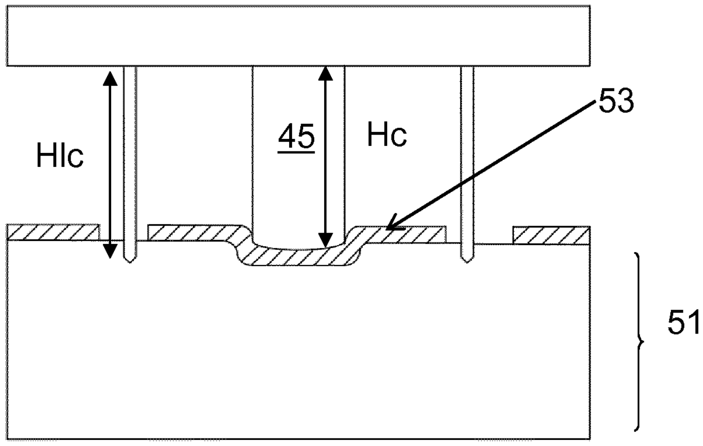


Fig.6b

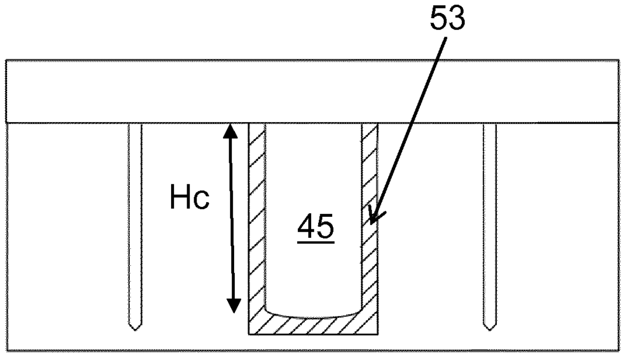


Fig.6c

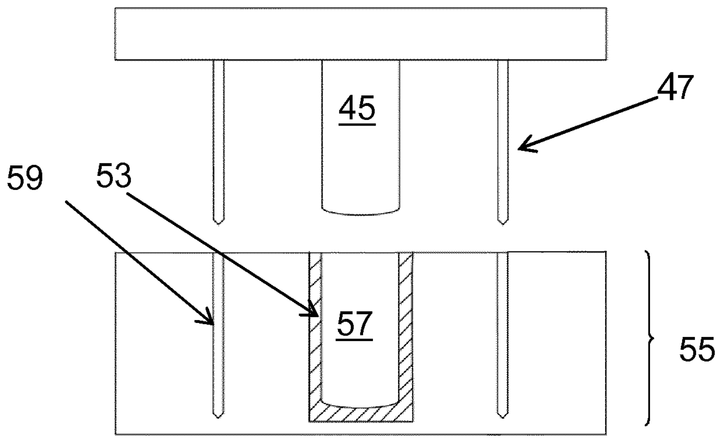


Fig.6d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 03089257 A
- WO 2006069912 A
- EP 1982848 A
- US 2710042 A
- EP 0510550 A
- WO 9736724 A
- WO 9916600 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A
- WO 2005087859 A
- WO 2006061064 A
- WO 2007017060 A
- US 4946899 A


### Littérature non-brevet citée dans la description


- **SAM ELLA ; PIERRE-YVES FORMAGNE ; VASILEIOS KOUTSOS ; JANE R. BLACKFORD.** Investigation of rubber friction on snow for tyres. *38th LEEDS-Lyon Symposium on tribology, Lyon,* 06 Septembre 2011
- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A : Polymer Chemistry,* 1992, vol. 30, 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science, Chemistry,* 1991, vol. A28, 65-80